# EUROPÄISCHE PATENTSCHRIFT

(11) **EP 3 532 343 B1**
(45) Veröffentlichungstag und Bekanntmachung des Hinweises auf die Patenterteilung: **27.01.2021**
(21) Anmeldenummer: 16788083.0
(22) Anmeldetag: 26.10.2016
(51) Int. Cl.: B60R 11/02, B60R 11/00

(54) **LÜFTUNGSGITTERHALTERUNG FÜR MOBILES ENDGERÄT**
VENTILATION GRID HOLDER FOR A MOBILE TERMINAL
ÉLÉMENT DE RETENUE DE REGISTRE DE VENTILATION POUR TERMINAL MOBILE

(43) Veröffentlichungstag der Anmeldung: 04.09.2019
(73) Patentinhaber: Tecflower AG, 8835 Feusisberg (CH)
(72) Erfinder: REINGER, Sascha, 8835 Feusisberg (CH)
(74) Vertreter: Prins Intellectual Property AG
(86) Internationale Anmeldenummer: PCT/EP2016/075832
(87) Internationale Veröffentlichungsnummer: WO 2018/077403

(56) Entgegenhaltungen:
- WO-A2-2009/147514

## Beschreibung

### Technisches Gebiet

Die vorliegende Erfindung beschreibt eine mehrteilige Lüftungsgitterhalterung mit einem Halteabschnitt, an welchem ein mobiles Endgerät befestigbar ist und mit einem Befestigungsabschnitt mittels welchem die Lüftungsgitterhalterung lösbar an bzw. zwischen Lüftungsgitterstäben eines Lüftungsgitters befestigbar ist.

### Stand der Technik

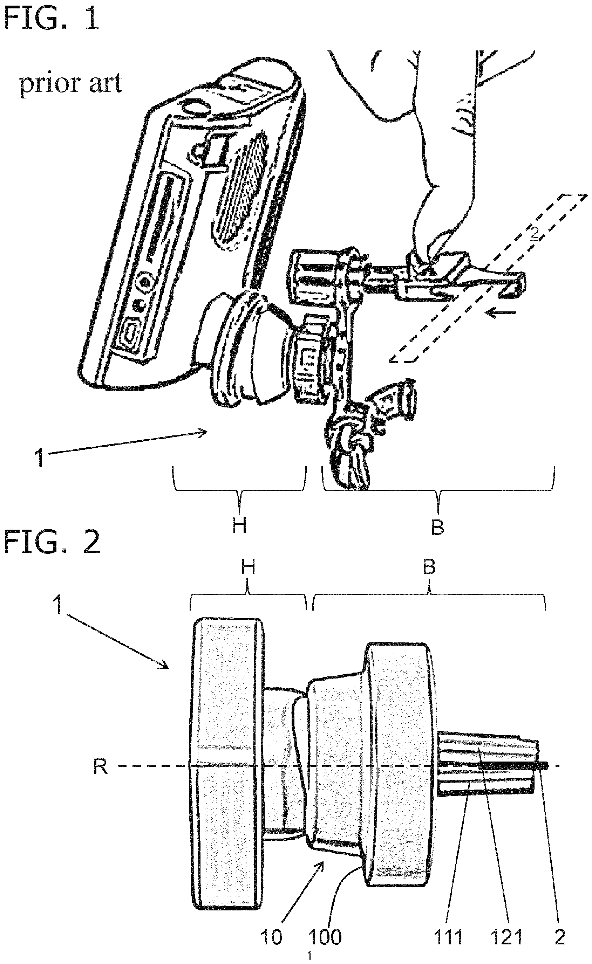

Die WO 2009/147514 offenbart eine mehrteilige Lüftungsgitterhalterung mit einem Halteabschnitt, an welchem ein mobiles Endgerät befestigbar ist und mit einem Befestigungsabschnitt mittels welchem die Lüftungsgitterhalterung lösbar an bzw. zwischen Lüftungsgitterstäben eines Lüftungsgitters befestigbar ist. Kommerziell erhältlich sind verschiedene Lüftungsgitterhalterungen, mit denen man beispielsweise Mobiltelefone oder Navigationsgeräte in einem Lüftungsgitter eines Automobils lösbar befestigen kann. Eine bekannte Lüftungsgitterhalterung 1 ist in Figur 1 dargestellt. In der Regel weisen derartige Lüftungsgitterhalterungen 1 einen Halteabschnitt H und einen Befestigungsabschnitt B auf. Am Halteabschnitt H kann mit unterschiedlichen Mitteln ein mobiles Gerät befestigt werden, beispielsweise durch eine Saugnapfbefestigung oder eine magnetische Halterung. Mit dem Befestigungsabschnitt B findet die lösbare Halterung im Fahrzeuginnenraum statt. Dabei ist meist ein Teil vorgesehen, welches in das Lüftungsgitter, genauer zwischen die Lüftungsgitterstäbe (gestrichelt dargestellt) eingreift, wobei eine Klemmverbindung des Befestigungsabschnittes B mit mindestens einem Lüftungsgitterstab erreicht wird. Wie in Figur 1 dargestellt ist eine mit dem Finger linear (in Pfeilrichtung) verschiebbare Klemme vorgesehen, welche an einem Lüftungsgitterstab eingehakt wird, wobei ein bewegbarer Haken linear gegen ein passendes Gegenstück geführt wird, sodass Haken und Gegenstück den Lüftungsgitterstab umgeben, halten.

Derartige Lüftungsgitterhalterungen 1 sind in der Praxis schwer zu bedienen, da die verschiebbare Klemme korrekt zwischen zwei Lüftungsgitterstäben eingeführt werden muss, bevor eine ausreichende Fixierung von Haken und Gegenstück am Lüftungsgitterstab vorgenommen werden kann. Die leichten und dünnen Bauteile aus Kunststoff sind dann mit einem hohen Mass an Fingerspitzengefühl zusammen zu schieben. Die Durchführung des Befestigungsvorgangs ist für viele Nutzer zu schwierig. Aufgrund der einfachen und dünnwandigen Herstellung der Klemmvorrichtung hält die Lüftungsgitterhalterung 1 im Betrieb nur geringe Lasten. Um möglichst günstig zu produzieren werden die Klemmen aus Kunststoff so dünnwandig wie möglich produziert. Eine Einführung zwischen Lüftungsgitterstäbe ist dann zwar einfacher, aber die Befestigung hält eventuell in sportlich gefahrenen Kurven nicht ausreichend gut und die Lüftungsgitterhalterung 1 verrutscht bzw. löst sich sogar teilweise aus dem Lüftungsgitter. Um die Extrembelastungen aushalten zu können, sind darum Abstützvorrichtungen nötig, die ausserhalb des Lüftungsgitters befestigt werden, wie ebenfalls in Figur 1 erkennbar. Damit wird die Kompaktheit der Lüftungsgitterhalterung 1 verschlechtert.

### Darstellung der Erfindung

Die vorliegende Erfindung hat sich zur Aufgabe gestellt eine kompakte stabile Lüftungsgitterhalterung zu schaffen, die einfach und benutzerfreundlich installierbar ist.

Eine weitere Aufgabe der Erfindung war die Schaffung einer Lüftungsgitterhalterung, die ohne zusätzliche Haltemittel ausserhalb des Lüftungsgitters zwischen den Lüftungsgitterstäben allein befestigbar ist.

Diese Aufgaben erfüllt eine Vorrichtung mit den Merkmalen des Patentanspruches 1 und vorteilhafte Ausführungsformen gemäss abhängiger Patentansprüche.

In einem ersten Schritt kann die Lüftungsgitterhalterung durch Einfädeln mindestens eines Fixierstiftes einer Fixierklemmhalterung in ein Lüftungsgitter gesteckt werden. Danach wird eine Drehbewegung des Befestigungsgehäuses ausgeführt, wodurch der Abstand zwischen mindestens einem Klemmstift eines Einlegemitnehmers und dem mindestens einen Fixierstift soweit verringert wird, bis die Lüftungsgitterhalterung lösbar im Lüftungsgitter befestigt ist.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt eine perspektivische Ansicht einer Lüftungsgitterhalterung gemäss Stand der Technik.
- Figur 2: zeigt eine kompakte und einfach zu bedienende Lüftungsgitterhalterung in einer perspektivischen Seitenansicht im verklemmten Zustand.
- Figur 3: zeigt eine perspektivische Ansicht einer Lüftungsgitterhalterung im verklemmten Zustand aus Richtung Befestigungsabschnitt.
- Figur 4a: zeigt eine perspektivische Explosionsdarstellung der steckbaren Bauteile einer Lüftungsgitterhalterung, während
- Figur 4b: eine Explosionsdarstellung der Lüftungsgitterhalterung in einer Seitenansicht zeigt, wobei unterschiedliche Ausrichtungen von Rotationsachse und der Stiftachsen erkennbar ist.

### Beschreibung

Im Folgenden wird eine mehrteilige Lüftungsgitterhalterung 1 beschrieben, welche einen Halteabschnitt H und einen Befestigungsabschnitt B aufweist. Am Halteabschnitt H können Vorrichtungen befestigt werden bzw. angeformt sein, welche elektronische mobile Geräte, wie Smartphones oder Tablets halten. Eine dafür geeignete Haltevorrichtung ist hier nur schematisch dargestellt. Becherhalter oder Vorrichtungen zum lösbaren befestigen von Schreibblocks oder Sonnenbrillen könnten ebenfalls am Halteabschnitt H befestigt werden. In der hier dagestellten Lüftungsgitterhalterung 1 kann sogar der Winkel zwischen Halteabschnitt H und Befestigungsabschnitt B variiert werden. Der Befestigungsabschnitt B ist an einem Lüftungsgitterstab 2 eines Lüftungsgitters befestigbar.

Die Lüftungsgitterhalterung 1 umfasst mehrere Bauteile, wobei in Figur 2 ein Befestigungsgehäuse 10 mit einer Gehäusewand 100 dargestellt ist. Das Befestigungsgehäuse 10 ist um eine Rotationsachse R rotierbar gestaltet, wobei mindestens ein Klemmstift 111 und mindestens ein Fixierstift 121 aus dem Befestigungsgehäuse 10 auf der dem Halteabschnitt H gegenüberliegenden Seite herausragt.

In das Befestigungsgehäuse 10 hineingesteckt ist eine Fixierklemmhalterung 12 vorgesehen, diese ist relativ zum Befestigungsgehäuse 10 um die Rotationsachse R rotierbar. Die Fixierklemmhalterung 12 ist hier mit der Gehäusewand 100 wirkverbunden von der Gehäusewand 100 umschlossen gelagert. Die Fixierklemmhalterung 12 weist mindestens einen Fixierstift 121 auf. Hier sind zwei Fixierstifte 121 am Befestigungsgehäuse 10 angeformt, welche vom Halteabschnitt H wegweisen. Bei Rotation um die Rotationsachse R entlang des gestrichelten Doppelpfeils kann der mindestens eine Klemmstift 111 linear entlang des durchgestrichenen Doppelpfeils relativ zum mindestens einen Fixierstift 121 bewegt werden. Hier sind jeweils zwei Klemmstifte 111 und zwei Fixierstifte 121 vorgesehen.

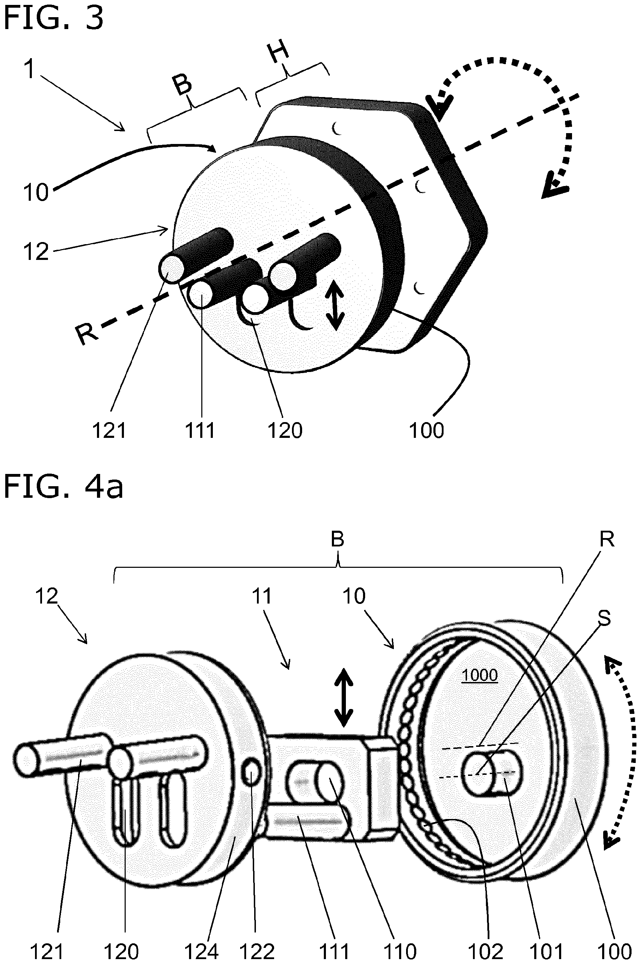

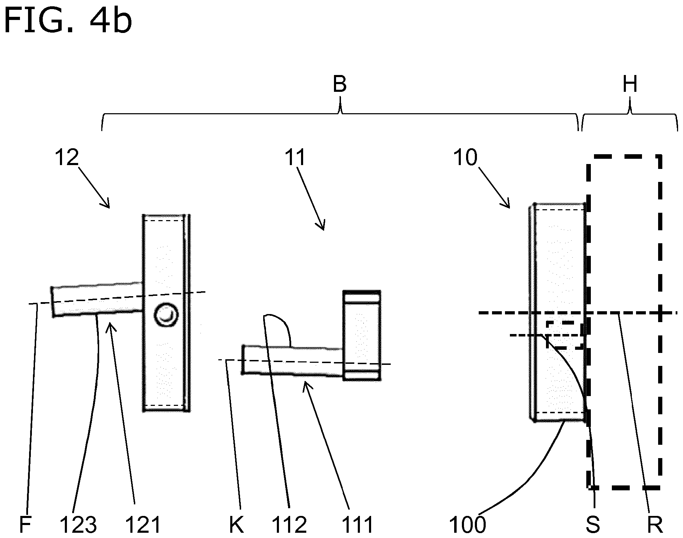

In der Explosionsdarstellung gemäss Figur 4a ist ein Einblick in den Innenraum des Befestigungsgehäuses 10 geschaffen. Lateral vom Zentrum einer Gehäuserückwand 1000 ist ein Drehstift 101 mit einer Drehstiftachse S angeordnet. Die Drehstiftachse S ist lateral von der Rotationsachse R beabstandet. Der Drehstift 101 ist vorteilhaft an der Gehäuserückwand 1000 angeformt und ragt aus dem Befestigungsgehäuse 10 heraus.

Der Einlegemitnehmer 11 weist eine Stiftaufnahme 110 auf, welche hier als Langloch gestaltet ist, welches den Körper des Einlegemitnehmers 11 in Querrichtung vollständig durchsetzt. Im zusammengesteckten Zustand durchsetzt der Drehstift 101 die Stiftaufnahme 110 mindestens teilweise. Bei Rotation des Befestigungsgehäuses 10 und damit Bewegung des Drehstiftes 101 ist der Einlegemitnehmer 11 mitbewegt. Der mindestens eine Klemmstift 111 ist am Einlegemitnehmer 11 an der dem Befestigungsgehäuse 11 gegenüberliegenden Seite befestigt bzw. angeformt. Hier sind die zwei Klemmstifte 111 so angeordnet und in ihrer Länge ausgeführt, dass diese im zusammengesteckten Zustand durch zwei Durchgangslöcher 120 an der Fixierklemmhalterung 12 durchragen.

Die Fixierklemmhalterung 12 weist ebenfalls zwei Fixierstifte 121 auf, welche auf der dem Einlegemitnehmer 11 abgewandten Seite wegragen. Die Seite der Fixierklemmhalterung 12, welche dem Einlegemitnehmer 11 zugewandt ist, muss entsprechend ausgehöhlt ausgestaltet sein, dass der Einlegemitnehmer 11 von der Fixierklemmhalterung 12 verdeckt ist. Die Aussenwand 124 der Fixierklemmhalterung 12 liegt im zusammengesteckten Zustand der Gehäusewand 100 des Befestigungsgehäuses 10 direkt gegenüber. Um eine versteckte Klemmwirkung mit Einrastung zu erreichen, können zusätzlich erste Klemmmittel 102 an der Innenseite der Gehäusewand 100 und zweite Klemmmittel 122 an der Aussenwand 124 der Fixierklemmhalterung 12 angeordnet sein. Hier sind die ersten Klemmmittel 102 als Sacklöcher 102 oder Mulden 102 eingebracht bzw. eingeformt und die zweiten Klemmmittel 122 sind als gefedert gelagerte Kugeln ausgestaltet. Diese ersten und zweiten Klemmmittel 102, 122 können natürlich auch auf andere Weise hergestellt sein, beispielsweise durch an der Aussenwand 124 angeformte oder befestigte Zungen, die in Aussparungen an der Innenwand der Gehäusewand 100 eingreifen, wobei es auf die Möglichkeit des Einrastens der Klemmmittel 102, 122 ankommt.

Um die Klemmwirkung zwischen Fixierstiften 121 und Klemmstiften 111 zu vergrössern, können die Fixierstiftachse F und die Klemmstiftachse K gegeneinander geneigt sein, indem diese einen Winkel ungleich Null einschliessen. Wahlweise können auch die einander zugewandten Fixierstiftflächen 123 und Klemmstiftflächen 112 derart ausgeführt sein, dass diese Flächen 112, 123 einen Winkel ungleich Null einschliessen. Wird ein Lüftungsgitterstab 2 zwischen Klemmstift 111 und Fixierstift 121 geklemmt, ist ein Herausrutschen verhindert.

In der Praxis wird die zusammengesteckte Lüftungsgitterhalterung 1 mit den Fixierstiften 121 und den Klemmstiften 111 in ein Lüftungsgitter eingesteckt, wobei sich ein Lüftungsgitterstab 2 beidseitig von Fixierstiften 121 und Klemmstiften 111 umgeben ist. Dann wird das Befestigungsgehäuse 10 relativ zur Fixierklemmhalterung 12 verdreht, was direkt am Befestigungsgehäuse 10 oder über Drehung des mit dem Befestigungsgehäuse 10 verbundenen Halteabschnittes H geschieht. Die Fixierklemmhalterung 12 wird durch Anschlag an dem Lüftungsgitterstab 2 an einer Rotation gehindert, während das Befestigungsgehäuse 10 den Einlegemitnehmer 11 mitnimmt. Die Klemmstifte 111 am Einlegemitnehmer 11 werden linear in Richtung Fixierstifte 121 bewegt, sodass sich der Abstand der Stifte 111, 121 verringert bis der Lüftungsgitterstab 2 eingeklemmt ist. Die Klemmmittel 102, 122 verhindern zusätzlich ein Lösen der Klemmung. Am Halteabschnitt H kann daraufhin beispielsweise ein Smartphone lösbar gelagert werden.

In einer abgewandelten Ausführungsform kann auch das Langloch 110 in der Gehäuserückwand 1000 des Befestigungsgehäuses 10 angeordnet sein und der Drehstift 101 an der dem Befestigungsgehäuse 10 zugewandten Seite des Einlegemitnehmers 11 angeordnet sein. Bei Rotation des Befestigungsgehäuse 10 kann dann ebenfalls eine Mitnahme des Einlegemitnehmers 11 erfolgen.

### Bezugszeichenliste

1 Lüftungsgitterhalterung
H Halteabschnitt
B Befestigungsabschnitt
   10 Befestigungsgehäuse (drehbar)
      100 Gehäusewand
         1000 Gehäuserückwand
      101 Drehstift
      102 erstes Klemmmittel (Sacklöcher)
         S Drehstiftachse
         R Rotationsachse
   11 Einlegemitnehmer
      110 Stiftaufnahme (Langloch)
      111 Klemmstift (mindestens einer)
      112 Klemmstiftfläche
      K Klemmstiftachse
   12 Fixierklemmhalterung
      120 Durchgangsloch (mindestens ein Langloch)
      121 Fixierstift (mindestens einer, fest an Fixierklemmhalterung befestigt)
      F Fixierstiftachse
         Winkel zwischen Klemmstift- und Fixierstiftachse Winkel zwischen Fixierstiftfläche und Klemmstiftfläche
      122 zweites Klemmmittel (Kugel gefedert gelagert)
      123 Fixierstiftfläche
      124 Aussenwand
2 Lüftungsgitterstab

## Patentansprüche

1. Mehrteilige Lüftungsgitterhalterung (1) mit einem Halteabschnitt (H), an welchem ein mobiles Endgerät befestigbar ist und
mit einem Befestigungsabschnitt (B) mittels welchem die Lüftungsgitterhalterung (1) lösbar an bzw. zwischen Lüftungsgitterstäben (2) eines Lüftungsgitters befestigbar ist,
**dadurch gekennzeichnet, dass**
der Befestigungsabschnitt (B) ein, um eine Rotationsachse (R) rotierbares Befestigungsgehäuse (10) mit einer Gehäusewand (100) aufweist, in welcher
ein Einlegemitnehmer (11) mit mindestens einem Klemmstift (111) und eine Fixierklemmhalterung (12) mit mindestens einem Fixierstift (121) und mindestens einem Durchgangsloch (120) im Befestigungsgehäuse (10) von der Gehäusewand (100) umschlossen mit ihr wirkverbunden lagerbar sind, dass der mindestens eine Klemmstift (111) das mindestens eine Durchgangsloch (120) der Fixierklemmhalterung (12) vollständig quert, sodass bei einer Drehbewegung des Befestigungsgehäuses (10) relativ zur Fixierklemmhalterung (12) um die Rotationsachse (R) und Bewegung eines Drehstiftes (101) mit einer lateral von der Rotationsachse (R) beabstandeten Drehstiftachse (S) eine Linearbewegung des Einlegemitnehmers (11) senkrecht zur Rotationsachse (R) durch Mitnahme des Einlegemitnehmers (11) durch den Drehstift (101) und eine Stiftaufnahme (110) erreichbar ist und somit eine Linearbewegung des mindestens einen Klemmstiftes (111) relativ zum mindestens einen Fixierstift (121) innerhalb des mindestens einen Durchgangsloches (120) erzeugbar ist.

2. Lüftungsgitterhalterung nach Anspruch 1, wobei der Einlegemitnehmer (11) und die Fixierklemmhalterung (12) innerhalb der Gehäusewand (100) gelagert steckverbunden sind.

3. Lüftungsgitterhalterung nach einem der vorhergehenden Ansprüche, wobei die Stiftaufnahme (110) im Einlegemitnehmer (11) angeordnet ist und ein den Körper des Einlegemitnehmers (11) vollständig querendes Langloch ist und der Drehstift (101) an einer Gehäuserückwand (1000) angeordnet ist.

4. Lüftungsgitterhalterung nach einem der Ansprüche 1 bis 3, wobei die Stiftaufnahme (110) in der Gehäuserückwand (1000) in Form eines Langloches angeordnet ist und der Drehstift (101) am Einlegemitnehmer (11) angeordnet ist.

5. Lüftungsgitterhalterung nach einem der vorhergehenden Ansprüche, wobei die Rotationsachse (R) des Befestigungsgehäuses (10) von der Stiftachse (S) des Drehstiftes (101) lateral versetzt ist und das mindestens eine Durchgangsloch (120) als Langloch ausgeführt ist.

6. Lüftungsgitterhalterung nach einem der vorhergehenden Ansprüche, wobei an der Gehäusewand (100) erste Klemmmittel (102) und an der Fixierklemmhalterung (12) zweite Klemmmittel (122) vorgesehen sind, welche eine schrittweise einrastende Relativbewegung zwischen Befestigungsgehäuse (10) und Fixierklemmhalterung (12) gewährleisten.

7. Lüftungsgitterhalterung nach Anspruch 6, wobei die ersten Klemmmittel (102) als Sacklöcher in der Gehäusewand (100) und die zweiten Klemmmittel (122) als gefedert gelagerte Kugeln ausgestaltet sind.

8. Lüftungsgitterhalterung nach einem der vorhergehenden Ansprüche, wobei Fixierstiftachse (F) und Klemmstiftachse (K) einen Winkel ungleich 0° einschliessen.

9. Lüftungsgitterhalterung nach einem der vorhergehenden, wobei der Winkel zwischen einander zugewandter Fixierstiftfläche (123) und Klemmstiftfläche (112) ungleich 0° ist.

10. Lüftungsgitterhalterung nach einem der vorhergehenden Ansprüche, wobei zwei Klemmstifte (111) am Einlegemitnehmer (11) und zwei Fixierstifte (121) an der Fixierklemmhalterung (12) angeordnet sind.

## Claims

1. multi-part ventilation grille holder (1) with a holding section (H) to which a mobile terminal device can be attached and
with a fastening section (B) by means of which the ventilation grille holder (1) can be fastened detachably to or between ventilation grille bars (2) of a ventilation grille,
**characterized in that**
the fastening section (B) comprises a fastening housing (10) rotatable about an axis of rotation (R) and having a housing wall (100)
in which
an insert driver (11) with at least one clamping pin (111) and a fixing clamp holder (12) with at least one fixing pin (121) and at least one through-hole (120) in the fastening housing (10), enclosed by the housing wall (100), can be mounted so as to be operatively connected thereto, **in that** the at least one clamping pin (111) completely crosses the at least one through-hole (120) of the fixing clamp holder (12),
so that upon a rotational movement of the fastening housing (10) relative to the fixing clamp mounting (12) about the axis of rotation (R) and movement of a rotary pin (101) with a rotary pin axis (S) laterally spaced from the axis of rotation (R), a linear movement of the insert driver (11) perpendicular to the axis of rotation (R) can be achieved by driving the insert driver (11) through the rotary pin (101) and a pin receptacle (110) and thus a linear movement of the at least one clamping pin (111) relative to the at least one fixing pin (121) can be generated within the at least one through hole (120).

2. ventilation grille holder according to claim 1, whereby the insert driver (11) and the fixing clamp holder (12) are plug-connected in a mounted manner within the housing wall (100).

3. ventilation grille support according to any of the preceding claims, wherein the pin receptacle (110) is arranged in the insert driver (11) and is an elongated hole completely traversing the body of the insert driver (11) and the rotary pin (101) is arranged on a housing rear wall (1000).

4. ventilation grille holder according to one of claims 1 to 3, wherein the pin holder (110) is arranged in the rear wall (1000) of the housing in the form of an elongated hole and the rotary pin (101) is arranged on the insert driver (11).

5. ventilation grille mounting according to one of the preceding claims, wherein the axis of rotation (R) of the mounting housing (10) is laterally offset from the pin axis (S) of the rotary pin (101) and the at least one through-hole (120) is designed as an elongated hole.

6. ventilation grille mounting according to one of the preceding claims, wherein first clamping means (102) are provided on the housing wall (100) and second clamping means (122) are provided on the fixing clamp mounting (12), which ensure a stepwise engaging relative movement between the fastening housing (10) and the fixing clamp mounting (12).

7. ventilation grille holder according to claim 6, wherein the first clamping means (102) are designed as blind holes in the housing wall (100) and the second clamping means (122) are designed as spring-mounted balls.

8. ventilation grille support according to any of the preceding claims, wherein the fixing pin axis (F) and clamping pin axis (K) include an angle unequal to 0°.

9. ventilation grille support according to one of the previous claims, where the angle between the facing surface of the fixing pin (123) and the clamping pin surface (112) is not equal to 0°.

10. ventilation grille support according to one of the previous claims, whereby two clamping pins (111) are arranged on the insertion driver (11) and two fixing pins (121) on the fixing clamp support (12).

## Revendications

1. un support de grille d'aération en plusieurs parties (1) avec une section de maintien (H) à laquelle un dispositif terminal mobile peut être fixé, et
avec une section de fixation (B) au moyen de laquelle le support de grille de ventilation (1) peut être fixé de manière amovible sur ou entre les barres de grille de ventilation (2) d'une grille de ventilation,
**caractérisé en ce que**
la section de fixation (B) comporte un boîtier de fixation (10) qui peut tourner autour d'un axe de rotation (R) et présente une paroi de boîtier (100) dans laquelle
un entraîneur d'insertion (11) avec au moins une goupille de serrage (111) et un support de serrage de fixation (12) avec au moins une goupille de fixation (121) et au moins un trou traversant (120) dans le boîtier de fixation (10), entouré par la paroi du boîtier (100), peuvent être montés en liaison active avec celui-ci, **en ce que** la au moins une goupille de serrage (111) traverse complètement le au moins un trou traversant (120) du support de serrage de fixation (12), de sorte que, lors d'un mouvement de rotation du boîtier de fixation (10) par rapport au support de la pince de fixation (12) autour de l'axe de rotation (R) et d'un mouvement d'un pivot (101) avec un axe de pivot (S) espacé latéralement de l'axe de rotation (R), un mouvement linéaire de l'entraîneur d'insertion (11) perpendiculaire à l'axe de L'axe de rotation (R) peut être obtenu en entraînant l'entraîneur d'insertion (11) à travers la broche rotative (101) et un réceptacle de broche (110) et ainsi un mouvement linéaire de la au moins une broche de serrage (111) par rapport à la au moins une broche de fixation (121) peut être généré à l'intérieur du au moins un trou traversant (120).

2. support de grille d'aération selon la revendication 1, dans lequel l'entraîneur d'insertion (11) et le support de pince de fixation (12) sont connectés par enfichage de manière à être montés dans la paroi du boîtier (100).

3. support de grille d'aération selon l'une des revendications précédentes, dans lequel le réceptacle de la broche (110) est disposé dans l'entraîneur d'insertion (11) et est un trou allongé traversant complètement le corps de l'entraîneur d'insertion (11) et la broche rotative (101) est disposée sur une paroi arrière du boîtier (1000).

4. montage d'une grille d'aération selon l'une des revendications 1 à 3, dans lequel le réceptacle de la broche (110) est disposé dans la paroi arrière du boîtier (1000) sous la forme d'un trou oblong et la broche rotative (101) est disposée sur l'entraîneur d'insertion (11).

5. montage d'une grille de ventilation selon l'une des revendications précédentes, dans lequel l'axe de rotation (R) du boîtier de montage (10) est décalé latéralement par rapport à l'axe (S) de l'axe de rotation (101) et le au moins un trou de passage (120) est conçu comme un trou oblong.

6. montage d'une grille de ventilation selon l'une des revendications précédentes, dans lequel des premiers moyens de serrage (102) sont prévus sur la paroi du boîtier (100) et des deuxièmes moyens de serrage (122) sont prévus sur le montage à étrier de fixation (12), qui assurent un mouvement relatif d'engagement pas à pas entre le boîtier de fixation (10) et le montage à étrier de fixation (12).

7. Montage de grille de ventilation selon la revendication 6, dans lequel les premiers moyens de serrage (102) sont conçus comme des trous borgnes dans la paroi du boîtier (100) et les seconds moyens de serrage (122) sont conçus comme des billes montées sur ressort.

8. le montage d'une grille de ventilation selon l'une des revendications précédentes, dans laquelle l'axe de la broche de fixation (F) et l'axe de la broche de serrage (K) comprennent un angle non égal à 0°.

9. support de grille d'aération selon l'une des revendications précédentes, l'angle entre la surface de la goupille de fixation (123) et la surface de la goupille de serrage (112) se faisant face n'étant pas égal à 0°.

10. support de grille d'aération selon l'une des revendications précédentes, dans lequel deux goupilles de serrage (111) sont disposées sur l'entraîneur d'insertion (11) et deux goupilles de fixation (121) sont disposées sur le support de serrage de fixation (12).
